# EUROPÄISCHE PATENTSCHRIFT

(11) **EP 1 882 004 B1**
(45) Veröffentlichungstag und Bekanntmachung des Hinweises auf die Patenterteilung: **08.07.2015**
(21) Anmeldenummer: 06724033.3
(22) Anmeldetag: 05.04.2006
(51) Int. Cl.: C08J 3/05, C08L 33/26

(54) **VERFAHREN UND VORRICHTUNG ZUR HERSTELLUNG KONZENTRIERTER POLYMERLÖSUNGEN**
METHOD AND DEVICE FOR PRODUCING CONCENTRATED POLYMER SOLUTIONS
PROCEDE ET DISPOSITIF POUR LA PRODUCTION DE SOLUTIONS POLYMERIQUES CONCENTREES

(30) Priorität: 08.04.2005 DE 102005016401
(43) Veröffentlichungstag der Anmeldung: 30.01.2008
(73) Patentinhaber: Solenis Technologies Cayman, L.P., 8200 Schaffhausen (CH)
(72) Erfinder: BUDDENBERG, Thorsten, 47809 Krefeld (DE); PAWEL, Hartmut, 32457 Porta Westfalica (DE); FISCHER, Werner, 47077 Willich (DE)
(74) Vertreter: Bülle, Jan
(86) Internationale Anmeldenummer: PCT/EP2006/003081
(87) Internationale Veröffentlichungsnummer: WO 2006/105942

(56) Entgegenhaltungen:
- EP-A- 0 050 312
- EP-A- 0 051 264
- EP-A- 1 642 922
- DE-A1- 10 210 511

## Beschreibung

Die vorliegende Erfindung betrifft ein Verfahren zur Herstellung von Lösungen wasserlöslicher Polymerisate aus Polymergranulaten, insbesondere von synthetischen Polymerisaten mit hohen Molekulargewichten und eine Vorrichtung zur Durchführung des Verfahrens.

Wasserlösliche Polymere besitzen häufig ein schlechtes Löseverhalten, insbesondere auch dann, wenn sie ein hohes Molekulargewicht aufweisen. Polyacrylamide stellen beispielsweise eine große Gruppe unter den wasserlöslichen Polymeren dar. Acrylamidpolymerisate werden vorwiegend in Form ihrer hochmolekularen (mittleres Molgewicht >10⁵) anionischen, kationischen oder amphoteren Copolymere in vielen Bereichen der Fest-Flüssigtrennung eingesetzt. Neben kommunalen Kläranlagen und der Papierindustrie ist die Bergbauindustrie ein weiterer wichtiger Anwender von Flockungshilfsmitteln.

Die Polymere kommen als verdünnte wässrige Lösung zur Anwendung, wobei die Konzentration der Polymere etwa 0,5 Gew.% beträgt. Zum Ansetzen der wässrigen Lösungen wird die benötigte Menge an Polymeren dem Wasser unter Rühren zugesetzt und in der Lösung dispergiert. Das Dispergieren der festen Acrylamidpolymerisate in Wasser ist durch deren Neigung zur Klumpenbildung bzw. zur Bildung von Agglomeraten nach dem Berühren mit Wasser sehr erschwert. Die Klumpen des festen Polymerisats entstehen unmittelbar nach dem Einbringen des Polymerpulvers in das Wasser durch Einkapselung ungelöster Feststoffe in einem äußeren Überzug des wassernassen Polymeren, wobei das Eindringen weiteren Wassers in das Agglomerat verzögert wird. Diese Verklumpungen werden insbesondere von den Feinanteilen unter 200 µm der Polymerpulver hervorgerufen.

Bis zum vollständigen Auflösen der Polymere ist eine Reifezeit von 1 bis 2 Stunden notwendig, während der gemäßigt weitergerührt wird. Zum Aufbereiten der Wirkstofflösung ist ein Zweitanksystem mit einem Reifetank und einem Vorlagetank mit einem Tankvolumen von jeweils zwischen 3 m³ und 10 m³ abhängig vom Hersteller oder der gewünschten Kapazität bekannt. Nach der Reifung wird die aufbereitete Polymerlösung in den Vorlagetank umgefüllt, dort ebenfalls ständig gerührt und zur Verwendung dem Vorlagetank kontinuierlich entnommen, solange bis der Vorlagetank entleert ist. Im Anschluss wird die in der Zwischenzeit im Reifetank neu aufbereitete Polymerlösung in den leeren Vorlagetank gepumpt. Wegen der hohen Füllvolumina und der langen Reifezeit, Wartezeit, Umfüllzeit und Entleerungszeit verbleibt die Polymerlösung mitunter auch mehrere Tage in den Tanks bis sie verwendet wird. Dadurch kann, verursacht durch biologische und scherinduzierte Abbauvorgänge, die Wirksamkeit der Polymerlösung abnehmen.

Um eine quasikontinuierliche Versorgung mit Polymerlösung zu gewährleisten, sind sogenannte Dreikammerlöseanlagen in Anwendung. Bei der Dreikammerlöseanlage gelangt das durch einen tangentiellen Wasserstrom benetze Granulat in die erste Kammer und wird mit Hilfe eines Rührwerks homogenisiert und gelöst. Das steigende Flüssigkeitsniveau in der ersten Kammer hat zur Folge, dass diese überläuft, dadurch gelangt die Lösung in eine zweite Kammer, wo sich zum Homogenisieren und Lösen ebenfalls ein Rührwerk befindet. Sobald das Flüssigkeitsniveau in der zweiten Kammer überschritten ist gelangt die Lösung durch einen weiteren Überlauf in die dritte Kammer, wo nochmals mit Hilfe eines Rührwerks homogenisiert und gelöst wird. In der dritten Kammer befindet sich eine Füllstandssonde die einen min-Kontakt (Start Benetzungsvorgang Kammer 1) und einen max-Kontakt (Stop Benetzungsvorgang Kammer 1) aufweist und entsprechend dem Füllstand den Benetzungsvorgang in der ersten Kammer startet oder beendet. Das auf diese Weise gelöste Granulat kann nach einer Reifezeit von ca. 30-60 min. für den Produktionsprozess genutzt werden.

Ferner befinden sich auch nach der Reifezeit in den wässrigen Polymerlösungen immer noch Gelanteile, die nicht gelöste Polymere enthalten. Gelanteile bewirken nicht nur einen Wirkungsverlust der Polymerlösung sondern führen auch zu technischen Problemen durch verstopfte Siebe oder, im Falle der Papierherstellung, zu unregelmäßigen Papieroberflächen.

Lösungen bis zu einer Konzentrationvon etwa 0,5 Gew.% lassen sich gerade noch mit einer Pumpe so schonend fördern, ohne dass während der Förderung ein nennenswerter Scherabbau eintritt. Eine gewaltsame Förderung höher konzentrierter Lösungen ist durchaus möglich, doch wird dabei stets ein Teil des Polymeren abgebaut. Die Limitierung auf niedrigkonzentrierte Polymerlösungen erfordert beim technisch Einsatz die Aufstellung unhandlich großer und teurer Lösestationen.

Um möglichst gelfreie Polymerlösungen zu erhalten, sind nach dem Stand der Technik verschiedene Schersysteme bekannt, die jedoch neben einer deutlichen Gelreduzierung auch einen unerwünschten Viskositätsabbau der Polymerlösung bewirken. Der Viskositätsabbau ist auf eine Reduzierung der Molekulargewichte der Polymeren zurückzuführen und bewirkt eine verminderte Wirksamkeit.

So wird in der WO 95/20431 ein Verfahren beschrieben, bei dem eine wässrige, Gelanteile aufweisende Polymerlösung unter Druck durch hintereinander angeordnete Filter mit abnehmender Maschenweite geleitet wird.

In der EP 0 050 312 A1 wird eine Vorrichtung und ein Verfahren zum Dispergieren von Polymerpulver und anschließendem Lösen in einer turbulenten Strömung des Lösemittels beschrieben. Hierbei ist eine große Abhängigkeit von der Korngröße des Polymerpulvers zu verzeichnen. Die Dispergierung erfolgt in einer Vorrichtung bestehend im wesentlichen aus einem Trichter mit Einfüllöffnung für das Polymerpulver und tangentialer Flüssigkeitszufuhr, einem Ablaufrohr mit Ringdüse und einer Strahlpumpe. Bei Korngrößen des Polymerpulvers > 800 Mikrometer treten dabei deutlich Effekverluste durch nichtgelöste Quellkörper auf. Feinteilige Polymerpulveranteile führen zu überhöhter Lösungsviskosität und zu Verstopfungen der Vorrichtung.

In der EP 0 051 264 A1 wird ein Verfahren zum Lösen von Granulaten aus Polyacrylamidgelen in turbulenten Strömungen beschrieben. Hierbei ist dem eigentlichen Auflösevorgang eine bis zu 20 Min. dauernde Behandlung des Polymergranulates mit einer Lösung mehrwertiger Salze vorgeschaltet. Die dabei entstehenden Polymerquellkörper werden in einer Strömungsapparatur, bestehend aus dem Lösebehälter und einem Rohrsystem solange im Kreislauf gepumpt, bis die Quellkörper zerstört sind. Die Strömungsapparatur ist in der DE-OS-28 07 709 beschrieben. Aufgrund der Salzzusätze weisen die nach diesem Verfahren hergestellten Polymerlösungen eine reduzierte Wirksamkeit als Flockungsmittel auf.

In der DE-OS 26 27 367 wird ein Verfahren und eine Vorrichtung zum Mischen von polymeren Polyelektrolytpulvern mit Wasser beschrieben, bei dem das Pulver mit Druckluft in ein Rohr gefördert wird und dort mit der Flüssigkeit besprüht und anschließend in einen mit Rühreinrichtungen versehenen Auflösbehälter gespült wird. Es wird empfohlen, die Pulver-Versorgungsleitung aus durchsichtigem Kunststoffmaterial anzufertigen, um Verstopfungen durch verklebtes Polymerpulver lokalisieren zu können.

Aus der GB 2 067 908 ist eine Vorrichtung und ein Verfahren bekannt, bei dem ein Pulver durch einen Luftstrom in eine vertikale zylindrischen Kolonne eingebracht und angefeuchtet wird, um dann eine homogene Lösung zu bilden. Die Kolonne weist Düsen auf, durch die das Lösemittel zugeführt wird. Die Entstehung kleinerer und kleinster Gelpartikel kann dabei jedoch nicht verhindert werden.

Der DE 102 10 511 A1 ist eine Lösevorrichtung zu entnehmen, bei der einem Mischtank über einen Wirbeltopf flüssiges oder pulverförmiges Polymer und Wasser zugeführt wird. Durch Mischeinbauten wird im Mischtank eine Zweizonen-Umlaufmischung mittels Zirkulation oder Wirbelströmung erzeugt, die eine Auflösung des Polymerpulvers bewirken soll. Am Boden der Lösevorrichtung erfolgt die Abnahme der gebrauchsfertigen Polymerlösung. Aufgrund der starken Verwirbelung kommt es zu einem die Wirksamkeit der Polymerlösung beeinträchtigenden Polymerabbau. Die Auflösung des pulverförmigen Polymers bereitet in der Praxis Probleme, störende Gelanteile werden nicht völlig vermieden. Polymer-Ansatzkonzentrationen, die 1 Gew.% deutlich überschreiten, sind mit dieser Vorrichtung nicht herstellbar.

DE 32 43 671 beschreibt eine Vorrichtung zum kontinuierlichen Mischen pulvriger Stoffe mit Flüssigkeiten, bei der die pulvrigen Feststoffe durch ein mittig angeordnetes Aufgaberohr in eine ringförmige Mischkammer eingesaugt werden, die mit einem rotierenden Pump- und Schaufelrad und dazwischen angeordneten Zahnkränzen versehen ist. Ein Flüssigkeitsstrom wird tangential in die Mischkammer eingeführt. Das angesaugte Pulver wird mit der flüssigen Phase durch die Zentrifugalströmung in das Rotor-Stator-Zahnkranzlabyrinth hineingefördert und bei dieser Zwangspassage kolloidal gelöst bzw. dispergiert. Die Dispersion wird über ein feststehendes Sieb abgeführt. DE 35 17 879 A1 beschreibt eine Fortentwicklung dieser Löseanlage durch Modifizierung mit fest eingebauten Lamellenkränzen. Trotz der relativ aufwendigen Mischtechnik gelingt es nicht, eine völlig gelfreie Lösung von Polyelektrolytpulvern herzustellen. Darüber hinaus wird bei scherempfindlichen Produkten, wie etwa hochmolekularen wasserlöslichen Flockungsmittelpolymeren, ein Molekulargewichtsabbau und damit ein Wirkungsverlust hervorgerufen.

DE 197 17 161 beschreibt eine Vorrichtung zum kontinuierlichen Aufschließen eines schwer benetzbaren pulvrigen Stoffes mit einer Flüssigkeit, bestehend aus einer rohrförmigen Aufgabeeinrichtung für den pulvrigen Stoff und mit einer nachgeschalteten Dispergiervorrichtung, wobei zwischen Aufgabe- und Dispergiereinheit Flüssigkeit unter Druck injiziert wird, um Verklebungen an Pulver berührenden Bereichen zu verhindern. Der Dispergiereinrichtung muss bei hochviskosen Medien eine Pumpe nachgeschaltet werden, um einen zuverlässigen Abtransport der Flüssigkeit aus der Dispergiereinrichtung zu gewährleisten.

EP 729 780 A2 beschreibt eine Anlage zum Dispergieren einer vorgegebenen Menge Flüssigkeit mit einer vorgegebenen Menge pulverförmigem Feststoff, bei der die vorgegebene Flüssigkeitsmenge aus ihrem intensiv gerührtem Vorratstank mehrfach im Kreislauf durch die Mischeinrichtung geführt und dabei mit weiterem Feststoff angereichert wird. Die Probleme der Auflösung löslicher Feststoffpulver werden nicht betrachtet.

DE 196 22 191 A1 beschreibt ein Verfahren und eine Vorrichtung zum kontaminationsfreien Dosieren und Fördern von zu dispergierenden bzw. zu lösenden Feststoffpulvern aus einem Pulvervorratsbehälter in einen Dispergier- bzw. Lösetank. Die Dosierung des Pulvers erfolgt staubfrei in einen Trichter und wird an dessen unterem Auslass in eine Flüssigkeitsstrahlpumpe eingesaugt, dispergiert bzw. gelöst und dann in den Lösetank gefördert. Das Verfahren vermag zwar eine staubfreie Förderung der Pulver zu ermöglichen, die gelösten Polymere sind jedoch nicht frei von Gelanteilen.

Der WO 92/21436 ist eine Vorrichtung zum Dispergieren, Suspendieren oder Emulgieren von Gasen, Flüssigkeiten und/oder fließfähigen festen Stoffen zu entnehmen, die einen scheibenförmigen Rotor in einer Dispergierkammer mit zwei Stoffeinlässen und einem Produktauslaß aufweist. Die Stoffströme werden im Randbereich der Rotorscheibe, die Zähne oder Flügel aufweist, zusammengeführt. Optional wird die Dispergiereinheit einen zusätzlichen Stator betrieben, der mit seinen radialen Öffnungen eine zusätzliche Dispergier- und Scherwirkung erzeugt. Aufgrund der intensiven Scherwirkung treten beim Dispergieren und Auflösen von Granulaten wasserlöslicher Polymere Wirkungsverluste durch Molekularabbau auf.

Aufgabe der Erfindung ist es daher, ein Verfahren zum Auflösen von wasserlöslichen, pulverförmigen und insbesondere hochmolekuleren Polymerisaten anzugeben, bei dem eine im Wesentlichen gelfreie Polymerlösung erhalten und dadurch der Aufwand für eine nachträgliche Abtrennung von Gelanteilen überflüssig wird. Die Wirksamkeit der Polymere soll durch das bereitzustellende Verfahren nicht oder nur geringfügig beeinträchtigt werden, d.h. beim Löseprozess müssen die Polymermoleküle ohne wesentliche Zerstörung in Lösung gebracht werden. Ferner ist es eine Aufgabe der Erfindung, das Verfahren zur Herstellung der Polymerlösungen so auszugestalten, dass es sowohl diskontinuierlich in kurzen Zeiträumen als auch kontinuierlich ausgeführt werden kann und die Herstellung von Lösungskonzentrationen von ≥ 1 Gew% ermöglicht.

Weiterhin soll das erfinderische Verfahren auch die Möglichkeit bieten, Polymerpulver mit hohen Anteilen von feinen Polymerpartikeln unter 250 µm und insbesondere unter 100 µm, die für gewöhnlich schwierig aufzulösen sind, ohne Nachteile für die Lösungseigenschaften aufzulösen.

Ferner ist es eine Aufgabe der Erfindung, eine entsprechende Vorrichtung zur Durchführung des Verfahrens bereitzustellen.

Die Aufgabe wird gelöst durch ein

Verfahren zur Herstellung einer wässrigen Polymerlösung aus festen Partikeln eines wasserlöslichen Polymeren, durch Zusammenführen von Wasser und Polymerpartikeln in einem Dispergieraggregat,
dadurch gekennzeichnet, dass
- die Dispergierung der Partikel mit dem Wasser unter Aufbringung einer ersten Leistung/m³ durchgeführt wird,
- die Wasser/Partikelmischung nach dem Verlassen des Dispergieraggregates in einen Rührbehälter überführt und dort unter Rühren weitgehend in Lösung gebracht wird,
- die wässrige Polymerlösung nach der Verweilzeit im Rührbehälter in einem Dispergieraggregat einer zweiten Dispergierung mit einer geringeren Leistung/m³ als bei der ersten Dispergierung unterzogen wird.

Überraschenderweise hat sich herausgestellt, dass die Herstellung wässriger, gelfreier Lösungen wasserlöslicher Polymere unter weitgehender Vermeidung von Molekulargewichtsabbau durch eine doppelte Dispergierung ermöglicht wird, bei der die zweite Dispergierung mit einer geringeren Misch- bzw. DispergierLeistung/m³ durchgeführt wird.

In einer bevorzugten Ausführungsform für die erste Dispergierung der Wasser/Polymerpulver-Mischung ist eine Begrenzung der Leistung auf 550 bis 1600 Wh/m³ und besonders bevorzugt auf 800 bis 1000 Wh/m³einzuhalten. Eine Unterschreitung der Mischenergie führt zu nicht optimaler Dispergierung mit der Folge verlängerter Verweilzeit im nachgeschalteten Rührbehälter. Bei Überschreitung der Mischenergie erfolgt eine teilweise Zerstörung der Molekularstruktur der Polymere, d.h. im Wesentlichen wird hier das Molekulargewicht abgebaut und damit auch die Wirksamkeit des Polymers als Flockungsmittel.

In dem erfinderischen Verfahren wird bevorzugt ein Dispergieraggregat verwendet, wie es in der WO 92/21436 beschrieben ist. Diese Schrift wird hiermit als Referenz eingeführt. Das Dispergieraggregat besteht aus einem scheibenförmigen Rotor in einer Dispergierkammer und ist mit zwei Stoffeinlässen für das Polymerpulver bzw. das Wasser und einem Produktauslass versehen. Die beiden Stoffströme werden im Randbereich der Rotorscheibe, vorzugsweise axial zusammengeführt, wobei der Dispergiervorgang abläuft. Der Produktauslass befindet sich am äußeren Rand der Dispergierkammer. Der Rotor weist an seinem äußeren Rand einen Rotorkranz mit Zähnen oder radialen Öffnungen auf. (Optional kann in dem Dispergieraggregat ein mit radialen Öffnungen versehener Stator zur Dispergierung des Polymerpulvers in Verbindung mit dem Rotor angeordnet sein.

Nach der ersten Dispergierstufe wird die Polymer/Wassermischung, in der bereits feinteilige Anteile teilweise gelöst und gröbere Polymerpartikel dispergiert sind, in einen Rührbehälter überführt und dort mit langsam laufenden Rührwerken gerührt. Durch diese Rührung wird im Wesentlichen eine weitgehende Benetzung und Anlösung aller Polymerteilchen sicher gestellt und eine Sedimentation während des weiteren Lösevorganges verhindert, ein Scherabbau durch die Rührung wird an dieser Stelle vermieden. Geeignete, im erfinderischen Verfahren zu verwendende Rührer sind beispielsweise Balkenrührer, Blattrührer, Ankerrührer. In der Durchführung des Verfahrens hat sich beispielsweise die Verwendung von langsam laufenden Blattrührern mit Drehzahlen von bis zu 300 Upm bewährt. Andere geeignete Rührwerke sind dem Fachmann bekannt.

Die Verweilzeit der Polymer/Wassermischung im Rührbehälter liegt bevorzugt bei 1 bis 15 Min., besonders bevorzugt bei 2 bis 10 Min. und ganz besonders bevorzugt bei 3 bis 6 Min. Im Falle eines kontinuierlichen Verfahrens, bei dem der Rührbehälter ständig mit neuer Polymer/Wassermischung beaufschlagt wird, gelten die zuvor genannten Verweilzeiten als mittlere Verweilzeiten. Abhängig von der Art des zu dispergierenden Polymers kann die Verweilzeit schwanken, beispielsweise benötigen kationische Polymerisate oftmals eine geringere Verweilzeit als anionische.

Nach dem Verlassen des Rührbehälters wird die wässrige Polymerlösung, die noch teilweise nicht aufgelöste Gelanteile enthält, einer zweiten Dispergierung unterworfen. Bei dieser Dispergierung werden die Gelanteile unter Vermeidung von Polymerabbau schonend in den Lösungszustand überführt. In einer bevorzugten Ausführungsform wird eine Misch- bzw. Dispergierleistung von 200 bis 500 Wh/m³, und besonders bevorzugt von 250 bis 400 Wh/m³ aufgewandt. Bei Unterschreitung der Mischenergie können die Gelanteile nicht vollständig gelöst werden, bei Überschreitung erfolgt ein Scherabbau der Polymere.

Das erfinderische Verfahren ermöglicht die Herstellung von Lösungen wasserlöslicher Polymere in einem breiten Konzentrationsbereich. Je nach Molekulargewicht des Polymers kann dieser Konzentrationsbereich schwanken. Während bei hochmolekularen synthetischen Polymeren bereits eine über 1 Gew. %ige Lösung aufgrund der starken Viskositätsentwicklung als konzentriert anzusehen ist, können bei niedermolekulareren Polymeren deutlich höhere Konzentrationen in Frage kommen. Bevorzugt werden durch das erfinderische Verfahren hochmolekulare wasserlösliche Polymere in einem Konzentrationsbereich von größer 1 Gew.%, besonders bevorzugt von größer 2 Gew.% und ganz besonders bevorzugt von größer 2,5 Gew.% hergestellt.

Wasserlösliche Polymere, die gemäß dem erfinderischen Verfahren vorteilhaft aufgelöst werden, sind sowohl synthetischer als auch natürlicher Art.

Von den natürlichen Polymeren seien beispielsweise die wasserlöslichen Polysaccharide aus Cellulose, Stärke, Galaktomannan, Chitosan und Xanthan genannt und insbesondere deren wasserlösliche Derivate. Die Derivatisierung kann durch physikalische Verfahren und/oder chemische Verfahren wie bespielsweise Veretherungs- und Veresterungsreagenzien erfolgen und führt zu neutralen, anionischen, nichtionischen und kationischen Produkten. Als chemische Derivate kommen vor allem die vom Typ Carboxyl, Carboxyalkyl, Hydroxyalkyl und deren Mischungen infrage. Beispielhaft seien die Verbindungen Carboxmethylcellulose, Methylcellulose, Hydroxypropylcellulose, Carboxmethylstärke, oxidierte Stärke, Quellstärke, kationische Stärkeether genannt.

Besonders geeignet ist das erfinderische Verfahren zur Auflösung synthetischer wasserlöslicher Polymere wie beispielsweise aus dem Anwendungsbereich der Flockungsmittel, deren Molekulargewichtsmittel für gewöhnlich bei größer 10⁵, vorzugsweise größer 10⁶ liegt. Die Polymere liegen für gewöhnlich in Pulverform vor, wobei die Partikel technischer Pulver üblicherweise durch Absiebung beim Herstellungsprozess den Bereich von 250 µm bis 1250 µm abdecken. Synthetische wasserlösliche Polymere im Sinne dieser Erfindung bauen sich aus wasserlöslichen, ethylenisch ungesättigten Monomeren durch radikalische Polymerisation auf. Je nach Monomerzusammensetzung können dabei nichtionische, kationische, anionische oder amphotere Polymere gebildet werden.

Polyacrylamide stellen eine bevorzugte Gruppe unter den erfindungsgemäß zu verwendenden synthetischen wasserlöslichen Polymeren dar. Unter einem Polyacrylamid im Sinne dieses Patentes versteht man ein wasserlösliches Homo- oder Copolymer, das als einen Monomerbestandteil Acrylamid enthält.

Als anionische Comonomere für Polyacrylamide kommen beispielsweise in Frage (Meth)acrylsäure, Vinylsulfonsäure, Acrylamidomethylpropansulfonsäure, (Meth)allylsulfonsäure, Maleinsäure, Fumarsäure, Itaconsäure. Alle aufgeführten Säuren können als freie Säuren, als Salze oder deren Mischung polymerisiert werden. Die Neutralisation der Monomere kann mit Alkalimetallhydroxiden, Erdalkalimetallhydroxiden, Aminen, Aminoalkoholen und oder Ammoniak erfolgen. Daneben ist jede weitere Base einsetzbar, die mit der Säure ein wasserlösliches Salz bildet, auch eine Mischneutralisation mit verschiedenen Basen ist möglich. Bevorzugte anionische Comonomere sind Acrylsäure, Vinylsulfonsäure und Acrylamidomethylpropansulfonsäure und /oder deren Salze.

Als nichtionische Comonomere für die Polyacrylamide kommen völlig oder begrenzt wasserlösliche Monomere in Frage, beispielsweise (Meth)acrylnitril, N,N-Dimethylacrylamid, Vinylpyridin, Vinylacetat, Methacrylamid, hydroxygruppenhaltige Ester polymerisationsfähiger Säuren die Hydroxyethyl- und -propylester der Acrylsäure und Methacrylsäure, weiter aminogruppenhaltige Ester und Amide polymerisationsfähiger Säuren wie etwa die Dialkylaminoester, z.B. Dimethyl- und Diethylaminoester der Acrylsäure und Methacrylsäure, beispielsweise Dimethylaminoethylacrylat oder z.B. die entsprechenden Amide wie etwa Dimethylaminopropylacrylamid. Begrenzt wasserlösliche Monomere werden nur in dem Umfang eingesetzt wie sie die Wasserlöslichkeit des resultierenden Copolymers nicht beeinträchtigen.

Als Comonomere für kationische Polyacrylamide eignen sich beispielsweise kationisierte Ester der (Meth)acrylsäure wie z.B. von Dimethylaminoethyl(meth)acrylat, Diethylaminoethyl(meth)acrylat, Diethylaminopropyl(meth)acrylat, Dimethylaminopropyl(meth)acrylat, Diethylaminopropyl(meth)acrylat, Dimethylaminobutyl(methacrylat), Diethylaminobutyl(meth)acrylat, kationisierte Amide der (Meth)acrylsäure wie z.B. von Dimethylaminoethyl(meth)acrylamid, Diethylaminoethyl(meth)acrylamid, Diethylaminopropyl(meth)acrylamid, Dimethylaminopropyl(meth)acrylamid, Diethylaminopropyl(meth)acrylamid, Dimethylaminobutyl(meth)acrylamid, Diethylaminobutyl(meth)acrylamid, kationisierte N-Alkylmono- und diamide mit Alkylresten von 1 bis 6 C-Atomen, wie z.B. von N-Methyl(meth)acrylamid, N,N-Dimethylacrylamid, N-Ethyl(meth)acrylamid, N-Propyl(meth)acrylamid, tert.-Butyl(meth)acrylamid, kationisierte N-Vinylimidazole sowie substituierte N-Vinylimidazole, wie z.B. von N-Vinyl-2-methylimidazol, N-Vinyl-4-methylimidazol, N-Vinyl-5-methylimidazol, N-Vinyl-2-ethylimidazol und kationisierte N-Vinylimidazoline, wie z.B. von Vinylimidazolin, N-Vinyl-2-methylimidazolin und N-Vinyl-2-ethylimidazolin. Die basischen Monomere werden in mit Mineralsäuren oder organischen Säuren neutralisierter oder quaternisierter Form eingesetzt, wobei die Quaternisierung vorzugsweise mit Dimethylsulfat, Diethylsulfat, Methylchlorid, Ethylchlorid oder Benzylchlorid vorgenommen wird. In einer bevorzugten Ausführungsform werden die mit Methylchlorid oder Benzylchlorid quaternisierten Monomere verwendet.

Bevorzugte Comonomere für kationische Polyacrylamide sind die kationisierten Ester und Amide der (Meth)acrylsäure, jeweils ein quaternisiertes N-Atom enthaltend und insbesondere bevorzugt werden quaternisiertes Dimethylaminopropylacrylamid und quaternisiertes Dimethylaminoethylacrylat verwendet.

Ein weiterer Vorteil des erfinderischen Verfahrens ist die Unempfindlichkeit gegenüber der Partikelgrößenverteilung des eingesetzten Polymergranulates. In der Praxis werden diese Polymerpulver mit möglichst geringen Anteilen unter 250 µm hergestellt, um einerseits die Staubentwicklung zu verhindern und andererseits um das Verklumpen dieser Feinanteile beim Einbringen in das Lösewasser zu vermeiden. Durch das erfinderische Verfahren ist es möglich, diese feinteiligen Bestandteile im Produkt zu belassen, da sie problemlos aufgelöst werden können. In einer vorteilhaften Ausführungsform des erfinderischen Verfahrens erfolgt die Herstellung der Polymerlösung ausschließlich mittels feinteiliger Polymerpulver der Teilchengröße unter 250 µm, vorzugsweise unter 150 µm. Bezüglich der Obergrenze der Polymerpulverteilchen lassen sich Pulver mit 1250 µm und größer ohne Probleme zu einer Lösung verarbeiten.

Ein weiterer Gegenstand der Erfindung ist die Angabe einer Vorrichtung zur Durchführung des erfinderischen Verfahrens in diskontinuierlicher Arbeitsweise gemäß Anspruch 11 und einer Vorrichtung in kontinuierlicher Arbeitsweise gemäß Anspruch 12.

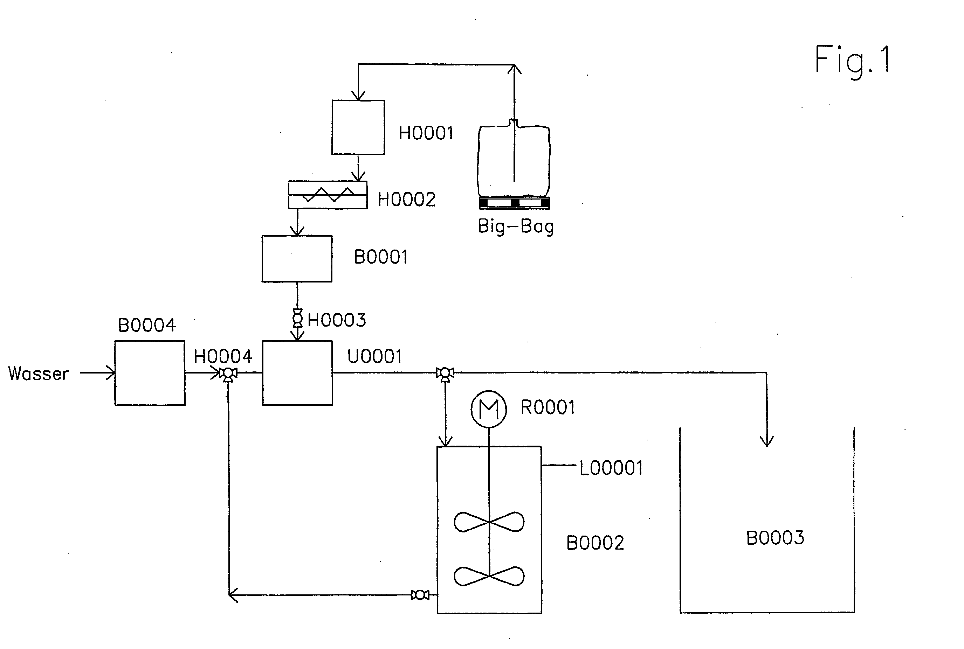

**Fig. 1** zeigt eine Vorrichtung, mit der das erfinderische Verfahren in Form einer diskontinuierlichen Lösungsherstellung ausgeführt werden kann. Das Polymergranulat wird mit Hilfe eines pneumatischen Förderers (H0001) aus einem Polymergranulatvorrat, beispielsweise einem Big-Bag oder einem Sack in den Vorratstrichter der Dosiereinheit (H0002) gefördert. Die Dosiereinheit (H0002) dosiert die benötigte Menge Granulat (je nach Konzentrationsvorgabe) in eine Granulatvorlage (B0001). Alternativ kann auch mit einer flexiblen Förderschnecke direkt aus dem Polymergranulatvorrat in die Vorlage B0001 gefördert werden. Der Behälter (B0004) dient als Wasservorlage und enthält die für einen Lösungsansatz erforderliche Wassermenge. Das diskontinuierliche Dispergieraggregat (U0001) wird gestartet, ein Teil des bereit gestellten Wassers aus dem Behälter (B0004) wird angesaugt und das Rührwerk (R0001) im Behälter (B0002) wird ebenfalls gestartet. Das Ventil (H0003) öffnet, sobald das Ventil (H0004) die Endlage Auf erreicht hat. Das Granulat wird unter Vakuum eingesaugt, welches das Dispergieraggregat (U0001) erzeugt. Das Granulat wird dabei vom Wasser benetzt und anschließend in den Behälter (B0002) gepumpt. Das Dispergieraggregat (U0001) besteht aus einem scheibenförmigen Rotor, und kann in einer optionalen Ausführungsform mit einem zusätzlichen Stator betrieben werden. Sobald die Granulatvorlage (B0001) vollständig geleert ist, wird das Ventil (H0003) geschlossen.
Der Behälter (B0002) wird über das Dispergieraggregat mit noch im Behälter (B0004) verbliebenem Rest-Wasser befüllt bis die Füllstandsmessung (L00001) das Dispergieraggregat (U0001) und das Wasserventil (H0004) abschaltet/schließt. Der Inhalt im Behälter (B0002) wird mit Hilfe eines Rührwerks (R0001) für ca. 1 bis 15 Min. homogenisiert.

Nach Ablauf der Rührzeit wird die Lösung aus dem Behälter (B0002) mit Hilfe des Aggregats (U0001) geleert und in einen Stammlösebehälter (B0003) gefördert.
Das Dispergieraggregat (U0001) dient dabei als Umfüllpumpe und Dispergieraggregat und hat die Eigenschaft noch vorhandenes Gel zu scheren und damit aufzulösen. Das Aggregat wird dabei mit einer geringeren Misch- bzw. Dispergierleistung/m³ als bei der ersten Dispergierung betrieben.
Die Füllstandsmessung (L00001) beendet den Umfüllvorgang, ab jetzt kann die Prozedur erneut gestartet werden.

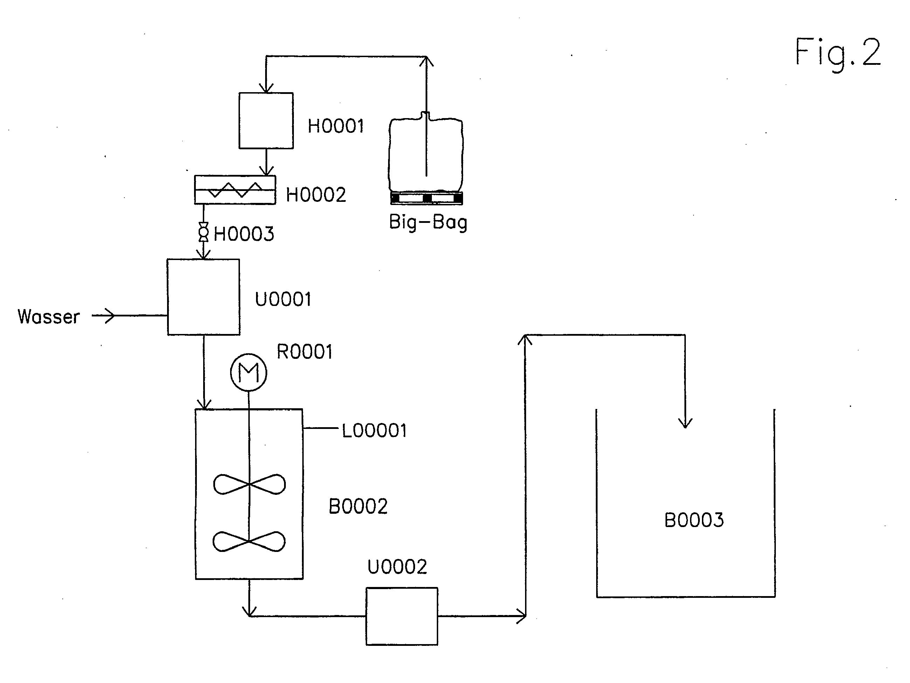

**Fig. 2** zeigt eine Vorrichtung, mit der das erfinderische Verfahren in Form einer kontinuierlichen Lösungsherstellung ausgeführt werden kann.

Das Polymergranulat wird mit Hilfe eines pneumatischen Förderers (H0001) aus einem Polymergranulatvorrat, beispielsweise einem Big-Bag oder einem Sack in den Vorratstrichter der Dosiereinheit (H0002) gefördert.
Das Granulat wird mit Hilfe einer Dosiereinheit (H0002) (mit einer zuvor fest definierten Förderleistung) bereitgestellt. Alternativ können die Einheiten H0001 und H0002 durch eine flexible Förderschnecke ersetzt werden.
Das benötigte Wasser wird online ohne Druck- und Förderschwankungen zur Verfügung gestellt.
Die Herstellung der Lösung wird durch den Start der Wasserversorgung begonnen, danach wird das Granulatventil (H0003) der Dispergieranlage (U0001) geöffnet und die Dosiereinheit (H0002) gestartet. Jetzt wird das Granulat unter Vakuum eingesaugt, welches das Dispergieraggregat (U0001) erzeugt. Das Granulat wird dabei vom Wasser benetzt und in einen Behälter (B0002) gefördert.
Das Dispergieraggregat (U0001) besteht aus einem scheibenförmigen Rotor, und kann in einer optionalen Ausführungsform mit einem zusätzlichen Stator betrieben werden.
Der Inhalt im Behälter (B0002) wird mit Hilfe eines Rührwerks (R0001) homogenisiert und am Absetzen gehindert. Die mittlere Verweilzeit im Behälter beträgt 1 bis 15 Min. Die den Behälter verlassende Lösung wird mit Hilfe eines weiteren Dispergieraggregates (U0002) in einen Stammlösebehälter gefördert. Das Aggregat (U0002) hat dabei die Eigenschaft noch vorhandenes Gel zu scheren und damit aufzulösen. Das Aggregat (U0002) arbeitet mit einer geringeren Misch- bzw. Dispergier-Leistung/m³ als das Aggregat (U0001).

### Beschreibung der einzelnen Komponenten

### B0001 Granulatvorlage

Die Granulatvorlage wird nur bei der diskontinuierlichen Dispergieranlage benötigt, damit proportional zur Wasservorlage und der geforderten Konzentration die benötigte Granulatmenge bereitgestellt werden kann.

### B0002 Behälter

Der Behälter dient zur Aufnahme des mit Wasser dispergierten Polymergranulates. Er ist mit einer Füllstandsüberwachung und einem Rührwerk ausgerüstet. Das Rührwerk hat die Aufgabe die Wasser/Polymergranulat Mischung während der Auflösung der Granulate zu homogenisieren und die dispergierten Polymergranulate am Absetzen zu hindern, eine Scherwirkung auf die dispergierten Granulate soll weitgehend vermieden werden. Demzufolge setzt man an dieser Stelle vorzugsweise langsam laufende Rührwerke ein. Als Rührer werden beispielsweise. Balkenrührer, Blattrührer, Ankerrührer verwendet.

Im Falle der kontinuierlichen Fahrweise kann es von Vorteil sein, wenn zwei oder mehr Rührbehälter hintereinander geschaltet werden oder sog. Durchlaufkammeranlagen (sog. Mehrkammeranlagen) verwendet werden.

### B0003 Tank

Der Tank dient zur Lagerung von hochkonzentrierter gelfreier Flockungsmittellösung. Die so genannte Stammlösung oder Gebrauchslösung je nach Konzentrationsbedarf wird von dort aus dem Verbraucher zur Verfügung gestellt.

### H0001 Saugförderer

Der Saugförderer dient zum fördern des Granulats und befindet sich immer oberhalb der Dosierschnecke. Das Granulat wird z.B. aus einem Big-Bag angesaugt. Das angesaugte Granulat fällt dann in den Vorratstrichter der Dosierschnecke.

### H0002 Dosierschnecke

Die Dosierschnecke dosiert das Granulat in der benötigten Menge. Die Förderleistung lässt sich durch die Veränderung der Drehzahl des Schneckenantriebes verstellen. Die geforderte Dosiermenge wird im Vorfeld ausgewogen und auf den erforderlichen Bedarf eingestellt. Im Betriebszustand fördert die Schnecke die geforderte Menge in eine Pulvervorlage (diskontinuierliche Fahrweise) oder proportional zum Wasserdurchfluss (kontinuierliche Fahrweise). Der Vorratstrichter der Dosierschnecke wird durch den Saugförderer nach Bedarf gefüllt. Der Trichter wird zusätzlich mit Hilfe eines kapazitiven Näherungsschalter überwacht, der alarmiert sobald ein Min-Wert unterschritten wird und zur Abschaltung der Nachgeschalteten Aggregate genutzt werden kann.

### H0003 Granulatventil

Das Ventil ist zwischen der Dosierschnecke und dem Dispergieraggregat montiert und öffnet sobald der Benetzungsvorgang gestartet wird.

### R0001 Rührwerk

Das Rührwerk fördert die Homogenisierung und die Auflösung der in dem Dispergieraggregat angefallenen Mischung aus angelöstem Polymerpulver und benetzten Polymerpulverteilchen und verhindert die Sedimentation der noch nicht vollständig aufgelösten Granulate.

### U0001 und U0002 Dispergieraggregat

Beim diesem Dispergieraggregat handelt es sich um eine In-Line-Dispergiermaschine mit einem veränderbaren scheibenförmigen Rotor System. Konstruktionsbedingt wird durch die im Dispergieraggregat strömende Flüssigkeit ein hohes Saugvakuum aufgebaut, welches zum staub- und verlustfreien Einsaugen von Pulvern/Granulaten geeignet ist.

Die In-Line-Dispergiermaschine ist vorzugsweise mit einem Motor, der für Frequenzumrichterbetrieb geeignet ist, ausgestattet. Eine Kupplung sorgt für die Trennung zwischen Motorwelle und separat gelagerter Maschinenwelle. In der Mischkammer befindet sich ein zweiteiliger Rotor (Rotornabe und Rotor-Flügelträger) mit 2, vorzugsweise hochglanzpolierten Rotornaben und 2 Abstreifern zur Vermeidung von Anhaftungen. Der Flüssigkeitszulauf und Ablauf erfolgt über Flansche, der Pulvereinlass erfolgt über einen exzentrisch an der Mischkammer angebrachten Einlassstutzen.

Das Dispergieraggregat besteht aus einem scheibenförmigen Rotor in einer Dispergierkammer und ist mit zwei Stoffeinlässen für das Polymerpulver bzw. das Wasser und einem Produktauslass versehen. Die beiden Stoffströme werden im Randbereich der Rotorscheibe, vorzugsweise axial zusammengeführt, wobei der Dispergiervorgang abläuft. Der Produktauslass befindet sich am äußeren Rand der Benetzungskammer. Der Rotor weist an seinem äußeren Rand einen Rotorkranz mit Zähnen oder radialen Öffnungen auf.
Optional kann in dem Dispergieraggregat ein mit radialen Öffnungen versehener Stator zur Dispergierung des Polymerpulvers in Verbindung mit dem Rotor angeordnet sein.

Die Erfindung kann in allen Anwendungsgebieten vorteilhaft eingesetzt werden, bei denen
- die Flockungsmittel größer oder gleich 1% als Gebrauchslösung dosiert werden,
- eine gelfreie Flockungsmittellösung benötigt wird,
- eine große Menge an Flockungshilfsmittel in kurzer Zeit benötigt wird und kein ausreichender Platz für große Löseanlagen zur Verfügung steht,
- die Herstellung hoch konzentrierter Stammlösungen erforderlich ist.

Die hoch konzentrierten Polymerlösungen, die nach dem erfinderischen Verfahren hergestellt werden, sind besonders vorteilhaft bei der Klärung von Trüben und der Entwässerung von Schlämmen, wie sie beispielsweise in Klärwerken, in der Schlickbaggerei oder im Bergbau anfallen gut geeignet, insbesondere wenn diese Trüben kontinuierlich in großen Mengen anfallen. Insbesondere sind diese Polymerlösungen auch gut als Flockungsmittel im Papierherstellungsprozess und als Flutpolymere in der tert. Erdölförderung einzusetzen.

### Beispiele

### Beispiel 1

Bei der Entwässerung eines kommunalen Klärschlammes auf Kammerfilterpressen wurden Lösungen eines kationischen Polyacrylamids, Typ Praestol^{®} 658 BC-S^{#}, als Flockungsmittel in einer Konzentration von 2 Gew.% eingesetz, wobei die Lösungen nach dem erfinderischen Verfahren in einer Vorrichtung gemäß **Fig**. **1** hergestellt wurden. In der ersten Dispergierstufe wurde eine Dispergierleistung von 900 Wh/m³ eingebracht und in der zweiten Dispergierstufe eine von 300 Wh/m³. Der Rührbehälter B0002 war mit einem langsam laufenden Blattrührer (250 Upm) ausgestattet. Zum Vergleich wurde der Klärschlamm mit einer konventionell hergestellten 0,2 %igen Lösung desselben kationischen Polyacrylamids behandelt. Insgesamt wurden 49 Versuchsansätze mit je 1m³ Flockungsmittel-Lösungen durchgeführt. Die Flockungsmittellösungen nach dem erfinderischen Verfahren waren frei von Gelkörperanteilen und zeigten eine hervorragende Flockungswirkung. Zur Erzielung eines Feststoffgehaltes von etwa 40 Gew.% im Filterkuchen waren bei Verwendung der 0,2%igen Lösung etwa 4,5 kg Flockungsmittel pro t Trockensubstanz erforderlich, während von der erfindungsgemäß hergestellte Lösung nur etwa 3,7 kg benötigt wurden.

^{#}: Praestol^{®} 658 BC-S ist ein kationisches Polyacrylamid der Fa. Stockhausen GmbH mit einem Molekulargewicht von größer 10⁶ und einem Kationogenitätsgrad von 80 % und einem Pulverfeinanteil < 315µm von 10% und < 100µm von unter 5 %.

### Beispiel 2

Unter Verwendung der apparativen Gegebenheiten und Einstellungen von Beispiel 1 wurde aus einem kationischen Polymerpulver, das überwiegend aus Feinanteilen bestand, eine 1 %ige Polymerlösung gefertigt. Gemäß Siebanalyse wies das Pulver die folgende Zusammensetzung auf:

| | |
|---|---|
| >1250 µm | 0,1% |
| >1000 µm | 0,7% |
| > 800 µm | 5,7% |
| > 500 µm | 7,8% |
| > 315 µm | 3,4% |
| > 100 µm | 44,7% |
| > 63 µm | 29,4% |
| < 63 µm | 8,2% |

Nach Durchlaufen der ersten Dispergierstufe bei 900 Wh/m³ wurde im Dispergierbehälter 5 Minuten gerührt, wonach die Wasser/Partikelmischung weitgehend in Lösung gebracht war, d.h. dass die Partikel gelöst oder von Wasser zumindest benetzt und angelöst waren. Im Anschluss an den Rührbehälter erfolgte die zweite Dispergierstufe bei 300 Wh/m³.
Die Polymerlösung ließ sich trotz des hohen Feinanteils ohne Probleme herstellen und wies nur geringfügige Gelanteile von < 5 ml/L auf. [Der Gelanteil wird bestimmt, indem man 1000 ml Polymerlösung auf 0,1 Gew. % verdünnt und über ein Normsieb der Maschenweite 0,315 mm gießt und dabei die Gelkörper auffängt und anschließend deren Volumen in einem Messzylinder bestimmt.] Die Viskosität der 1%igen Lösung betrug 1500 mPas nach Herstellung, und blieb auch nach 1 h unverändert.

Aus den Versuchsergebnissen wurden die Vorteile der nach dem erfindungsgemäßen Verfahren hergestellten Polymerlösungen deutlich. Die gegenüber der normalen Fahrweise hoch konzentrierten Polymerlösungen bewirkten eine Verringerung des Volumens der Flockungsmittellösung und der Betriebswasserkosten um ca. 90%, eine Reduzierung der Flockungsmittelmenge um ca. 15%. Darüber hinaus war eine Reduzierung von Stromkosten von 80% durch Einsparungen bei Rührwerken und Dosierpumpen zu verzeichnen.
Ein weiterer Vorteil des erfindungsgemäßen Verfahrens liegt in der Möglichkeit der Herstellung von Polymerlösungen aus feinteiligen Polymerpulvern, die bei konventioneller Auflösung aufgrund starker Verklumpungseffekte nicht einsetzbar sind.

## Patentansprüche

1. Verfahren zur Herstellung einer wässrigen Polymerlösung aus festen Partikeln eines wasserlöslichen Polymeren, durch Zusammenführen von Wasser und Polymerpartikeln in einem Dispergieraggregat, **dadurch gekennzeichnet, dass**
- die Dispergierung der Partikel mit dem Wasser unter Aufbringung einer ersten Leistung/m³ durchgeführt wird,
- die Wasser/Partikelmischung nach dem Verlassen des Dispergieraggregates in einen Rührbehälter überführt und dort unter Rühren weitgehend in Lösung gebracht wird,
- die wässrige Polymerlösung nach der Verweilzeit im Rührbehälter in einem Dispergieraggregat einer zweiten Dispergierung mit einer geringeren Leistung/m³ als bei der ersten Dispergierung unterzogen wird.

2. Verfahren nach Anspruch 1, **dadurch gekennzeichnet, dass** bei der ersten Dispergierung eine Misch- bzw. Dispergierleistung von 550 bis 1600 Wh/m³ aufgewandt wird.

3. Verfahren nach Anspruch 1 bis 2, **dadurch gekennzeichnet, dass** bei der zweiten Dispergierung eine Misch- bzw. Dispergierleistung von 200 bis 500 Wh/m³ aufgewandt wird.

4. Verfahren nach Anspruch 1 bis 3, **dadurch gekennzeichnet, dass** die dispergierten Polymerpartikel im Rührbehälter eine Verweilzeit von 1 bis 15 Min aufweisen.

5. Verfahren nach Anspruch 1 bis 4, **dadurch gekennzeichnet, dass** die Polymerpartikel im Rührbehälter durch ein langsam laufendes Rührwerk am Absetzen gehindert werden.

6. Verfahren nach Anspruch 1 bis 5, **dadurch gekennzeichnet, dass** die erste und zweite Dispergierung in einem Dispergieraggregat erfolgt, bestehend aus einer Dispergierkammer mit einem scheibenförmigen Rotor, in dessen Randbereich ein Rotorkranz mit Zähnen oder radialen Öffnungen vorhanden ist.

7. Verfahren nach Anspruch 1 bis 6, **dadurch gekennzeichnet, dass** als wasserlösliche Polymere synthetische anionische, kationische oder amphotere Polymerisate verwendet werden.

8. Verfahren nach Anspruch 1 bis 7, **dadurch gekennzeichnet, dass** die Polymerlösung eine Konzentration von größer 1 Gew.% aufweist.

9. Vorrichtung zur Auflösung wasserlöslicher Polymerpulver, welche die Komponenten
1 a. einen Wasservorratsbehälter (B0004);
2a. ein Dispergieraggregat (U0001);
3a. einen Rührbehälter (B0002); und
4a. einen Vorratstank (B0003);
aufweist, die Flüssigkeit leitend miteinander verbunden sind;
wobei der Produktauslass des Rührbehälters durch das Dispergieraggregat (U0001) in den Vorratstank (B0003) geführt wird.

10. Vorrichtung zur kontinuierlichen Auflösung wasserlöslicher Polymerpulver, welche die Komponenten
1 b. eine Wasserzuführung;
2b. ein Dispergieraggregat (U0001);
3b. einen Rührbehälter (B0002);
4b. ein Dispergieraggregat (U0002);
5b. einen Vorratstank (B0003);
aufweist, die Flüssigkeit leitend miteinander verbunden sind.

## Claims

1. Method of producing an aqueous solution of polymers from solid particles of a water-soluble polymer by combining water and polymer particles in a dispersing apparatus, **characterised in that**
- the dispersing of the particles with the water is performed by applying a first power level/m³,
- after leaving the dispersing apparatus, the water/particle mixture is transferred into a stirring tank where it continues to be dissolved while being stirred,
- after a dwell time in the stirring tank, the aqueous solution undergoes a second dispersing operation in a dispersing apparatus at a lower power level/m³ than in the first dispersing operation.

2. Method according to claim 1, **characterised in that**, for the first dispersing, a mixing or dispersing power of 550 to 1600 Wh/m³ is used.

3. Method according to claims 1 to 2, **characterised in that**, for the second dispersing, a mixing or dispersing power of 200 to 500 Wh/m³ is used.

4. Method according to claims 1 to 3, **characterised in that** the dwell time of the dispersed polymer particles in the stirring tank is from 1 to 15 minutes.

5. Method according to claims 1 to 4, **characterised in that** the polymer particles are prevented from settling in the stirring tank by a slowly running stirrer.

6. Method according to claims 1 to 5, **characterised in that** the first and second dispersing operations take place in a dispersing apparatus, consisting of a dispersing chamber with a disc-shaped rotor, having at its outer edge a rotor rim with teeth or radial openings.

7. Method according to claims 1 to 6, **characterised in that** anionic, cationic, or amphoteric polymers can be used a water-soluble polymers.

8. Method according to claims 1 to 7, **characterised in that** the polymer solution has a concentration greater than 1 % w/w.

9. Device to dissolve water-soluble polymer powders which has the components
1 a. a water receiving tank (B0004);
2a. a dispersing apparatus (U0001);
3a. a stirring tank (B0002); and
4a. a storage tank (B0003);
which are flow-connected to each other.
wherein the product outlet of the stirring tank is fed though the dispersing apparatus (U0001) into the storage tank (B0003).

10. Device for the continuous dissolving of water-soluble polymer powders which has the following components
1 b. a water supply;
2b. a dispersing apparatus (U0001);
3b. a stirring tank (B0002);
4b. a dispersing apparatus (U0002);
5b. a storage tank (B0003);
which are flow-connected to each other.

## Revendications

1. Procédé pour la préparation d'une solution aqueuse de polymère à partir de particules solides d'un polymère soluble dans l'eau par réunion d'eau et de particules polymères dans un appareil de dispersion, **caractérisé en ce que**
- la dispersion des particules avec l'eau est réalisée par application d'une première puissance/m³,
- le mélange eau/particules est transféré, après avoir quitté l'appareil de dispersion, dans une cuve agitée et y est largement amené en solution sous agitation,
- la solution aqueuse de polymère est soumise, après le temps de séjour dans la cuve agitée, dans un appareil de dispersion, à une deuxième dispersion à une puissance/m³ inférieure à celle lors de la première dispersion.

2. Procédé selon la revendication 1, **caractérisé en ce qu'**on applique, lors de la première dispersion, une puissance de mélange ou de dispersion de 550 à 1600 Wh/m³.

3. Procédé selon la revendication 1 à 2, **caractérisé en ce qu'**on applique, lors de la deuxième dispersion, une puissance de mélange ou de dispersion de 200 à 500 Wh/m³.

4. Procédé selon la revendication 1 à 3, **caractérisé en ce que** les particules polymères dispersées présentent un temps de séjour dans la cuve agitée de 1 à 15 minutes.

5. Procédé selon la revendication 1 à 4, **caractérisé en ce que** la décantation des particules polymères dans la cuve agitée est empêchée par un organe d'agitation lent.

6. Procédé selon la revendication 1 à 5, **caractérisé en ce que** la première et la deuxième dispersion ont lieu dans un appareil de dispersion, constitué par une chambre de dispersion présentant un rotor en forme de disque, une couronne de rotor présentant des dents ou des ouvertures radiales étant présente en sa zone périphérique.

7. Procédé selon la revendication 1 à 6, **caractérisé en ce qu'**on utilise, comme polymères solubles dans l'eau, des polymères synthétiques anioniques, cationiques ou amphotères.

8. Procédé selon la revendication 1 à 7, **caractérisé en ce que** la solution de polymère présente une concentration supérieure à 1% en poids.

9. Dispositif pour la dissolution de poudres polymères solubles dans l'eau, qui présente les composants
1a. un réservoir d'eau (B0004) ;
2a. un appareil de dispersion (U0001) ;
3a. une cuve agitée (B0002) ; et
4a. un réservoir (B0003) ;
qui sont reliés les uns aux autres de manière à guider le liquide ;
la sortie de produit de la cuve agitée étant guidée par l'appareil de dispersion (U0001) dans le réservoir (B0003).

10. Dispositif pour la dissolution continue de poudres polymères solubles dans l'eau, qui présente les composants
1b. une alimentation en eau ;
2b. un appareil de dispersion (U0001) ;
3b. une cuve agitée (B0002) ;
4b. un appareil de dispersion (U0002) ;
5b. un réservoir (B0003) ;
qui sont reliés les uns aux autres de manière à guider le liquide.
